# EUROPEAN PATENT APPLICATION

(11) **EP 2 498 216 A2**
(43) Date of publication of application: **12.09.2012**
(21) Application number: 11812768.7
(22) Date of filing: 27.07.2011
(51) Int. Cl.: G06Q 50/00, G06Q 30/00

(54) **METHOD AND SYSTEM FOR DISPLAYING AN ADVERTISEMENT IN AN IDLE SPACE UPON THE NOTIFICATION OF THE ARRIVAL OF A RECEIVED MESSAGE**

(30) Priority: 28.07.2010 KR 20100072733
(71) Applicant: Seo, Jang Won, Incheon 406-728 (KR); Cho, Yong Sig, Seoul 137-779 (KR)
(72) Inventor: Seo, Jang Won, Incheon 406-728 (KR); Cho, Yong Sig, Seoul 137-779 (KR)
(74) Representative: Peter, Julian
(86) International application number: PCT/KR2011/005535
(87) International publication number: WO 2012/015239

(57) **Abstract**

According to one embodiment of the present invention, a method for displaying an advertisement comprises the following steps: when a message arrival notification signal for notifying of the arrival of a message is received in a portable terminal, outputting advertisement content in an idle space of a message arrival notification window intended for the notification of the arrival of the message; when a receiver clicks a button for reading the message, shifting, from the message arrival notification window in which the advertisement content is being outputted, to a message window for reading the received message, and continuously outputting the advertisement content in the idle space of the message window; and, when the receiver has completed the reading of the message and closes the message window, canceling the output of the advertisement content and simultaneously shifting to a website of an advertiser, wherein the advertisement content is preemptively downloaded from an advertisement server and stored in a memory of the portable terminal, or received by means of streaming from the advertisement server simultaneously with the reception of the message.

## Description

### Technical Field

The present invention relates to a method and system for displaying an advertisement in an idle space when arrival of a received message is reported.

### Background Art

Recently, a portable terminal such as a portable phone has developed as a portable intelligence including various multimedia functions in addition to a conventional function of providing voice communication. Accordingly, recent portable terminals may generally provide a function of transceiving multimedia data such as text, pictures, audio data, songs, movies, and the like, in addition to a function of voice communication.

A text message transceiving scheme may provide a function of transceiving a long message and a multimedia message, in addition to a short message.

A short message service (SMS) among the text message services may provide a function of transceiving a short sentence of approximately 40 Hangul characters, between portable terminals or between a personal computer accessing the Internet and a portable terminal.

The text message service may transfer contents at the same time of transferring, unlike an e-mail, and may be preserved for a few days when a portable terminal is turned off and even when a person on the other end is located in an area having a problem in call connection, unlike a wireless call service and thus, the text message service has consolidated its position as one of the communication schemes.

Accordingly, many advertisers or advertising companies provide advertising services through use of the text message service, and the advertising services may provide a no-charge or discount call service when a user views advertisements for a predetermined time.

However, according to the conventional advertising service through use of the text message service, an advertising agent or an advertiser transmits advertisements as spam text messages without obtaining agreements from receivers. Accordingly, the receiver may receive an undesired text message and may delete the text message without checking it and thus, the advertising service through use of the text message may not work smoothly.

### Detailed Description of the Invention

### Technical Problem

Therefore, the present invention has been made in view of the above-mentioned problems, and an aspect of the present invention is to provide an advertisement displaying system and method that may continuously display an advertisement in an idle space of a message arrival notification window and an idle space of a text message window from a time when a message arrival notification signal arrives at a portable terminal until the text message window is closed and thus, the advertisement may be effectively provided to a portable phone user who pays attention to checking a text message.

Another aspect of the present invention is to provide an advertisement displaying system and method that may display an advertisement on an idle space of a missed call notification screen when a missed call exists and thus, user's attention may be drawn and an advertising effect may be maximized without causing inconvenience to the user.

Another aspect of the present invention is to provide an advertisement displaying system and method that may provide a predetermined number of points corresponding to a predetermined portion of advertising rates to a receiver who has viewed an advertisement so that the receiver may have a benefit of a free or discount text message service.

The problems that the present invention intends to solve may not be limited to the above-mentioned problem(s), and other problems that are not mentioned may be apparently understood by those skilled in the art.

### Technical Solution

In accordance with an aspect of the present invention, there is provided an advertisement displaying method, the method including outputting an advertising content in an idle space of a message arrival notification window that reports arrival of a text message when a message arrival notification signal that reports the arrival of the text message is received by a portable terminal; shifting the message arrival notification window to a text message window where the received text message is checked and continuously outputting the advertising content or other advertisements in an idle space of the text message window when a receiver clicks a button for checking the text message on the message arrival notification window where the advertising content is being output; and cancelling outputting of the advertising content and shifting the text message window to a website of an advertiser based on an agreement of a consumer when the receiver checks the text message and closes the text message window, and the advertising content is downloaded from an advertisement server in advance and stored in a memory of the portable terminal, or is received from the advertisement server based on a streaming scheme at the same time of the reception of the text message.

In accordance with another aspect of the present invention, there is provided an advertisement displaying method, the method including outputting an advertising content in an idle space of a missed message notification window reporting that a missed call exists when a receiver fails to answer an incoming signal received by a portable terminal and the incoming signal is terminated; shifting the missed message notification window to a missed call checking window where a phone number of a missed incoming call is checked, and continuously outputting the advertising content in an idle space of the missed call checking window when the receiver clicks a button for checking the phone number on the missed message notification window where the advertising content is being output; and cancelling outputting of the advertising content or shifting the missed call checking window to a website of an advertiser when the receiver checks the missed call and closes the missed call checking window, and the advertising content is downloaded from an advertisement server in advance, and stored in a memory of the portable terminal, or is received from an advertisement server based on a streaming scheme from the advertisement server at the same time of the reception of the text message.

In accordance with another aspect of the present invention, there is provided an advertisement displaying system, the system including an advertisement output unit to output an advertising content in an idle space of a message arrival notification window that reports arrival of a text message when a message arrival notification signal that reports arrival of the text message is received by a portable terminal, and when a receiver clicks a button for checking the text message on the message arrival notification window where the advertising content is being output, to shift the message arrival notification window to a text message window where the received text message is checked, and to continuously output the advertising content in an idle space of the text message window; and an advertisement cancelling unit to cancel outputting of the advertising content or to shift the text message window to a website of an advertiser when the receiver checks the text message and closes the text message window, and the advertising content is downloaded from an advertisement server in advance, and stored in a memory of the portable terminal, or is received from the advertisement server based on a streaming scheme at the same time of the reception of the text message.

In accordance with another aspect of the present invention, there is provided an advertisement displaying system, the system including an advertisement output unit to output an advertising content in an idle space of a missed message notification window reporting that a missed call exists when a receiver fails to answer an incoming signal received by a portable terminal and the incoming signal is terminated, and when a receiver clicks a button for checking a phone number of a missed incoming call on the missed message notification window where the advertising content is being output, to shift the missed message notification window to a missed call checking window where the phone number is checked, and to continuously output the advertising content in an idle space of the missed call checking window; and an advertisement cancelling unit to cancel outputting of the advertising content or to shift the missed call checking window to a website of an advertiser when the receiver checks the phone number and closes the missed call checking window, and the advertising content is downloaded from an advertisement server in advance, and stored in a memory of the portable terminal, or is received from the advertisement server based on a streaming scheme at the same time of the reception of the text message.

Details of exemplary embodiments are described in the detailed descriptions and accompanying drawings.

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. The present invention is defined by claims. Like reference numerals in the drawings denote like elements.

### Advantageous Effects

According to an embodiment of the present invention, an advertisement displaying system and method may continuously display an advertisement in an idle space of a message arrival notification window and an idle space of a text message window from a time when a message arrival notification signal arrives at a portable terminal until the text message window is closed and thus, may effectively provide the advertisement to a portable phone user who pays attention to the text message.

According to an embodiment of the present invention, an advertisement displaying system and method may display an advertisement on an idle space of a missed call notification screen when a missed call exists and thus, may draw a user's attention and may maximize an advertising effect without causing inconvenience to the user.

According to an embodiment of the present invention, an advertisement displaying system and method may provide a predetermined number of points corresponding to a predetermined portion of advertising rates to a receiver who has viewed an advertisement so that the receiver may have a benefit of a free or discount text message service.

### Brief Description of the Drawings

FIG. 1 is a diagram illustrating a configuration of a network of an advertisement displaying system according to an embodiment of the present invention;

FIG. 2 is a block diagram illustrating an advertisement displaying system according to an embodiment of the present invention;

FIGS. 3 and 4 are diagrams illustrating an example of displaying an advertising content according to an embodiment of the present invention;

FIG. 5 is a diagram illustrating an example of a screen when an advertisement is received according to an embodiment of the present invention;

FIG. 6 is a diagram illustrating an example of displaying an advertising content according to another embodiment of the present invention;

FIG. 7 is a flowchart illustrating an advertisement displaying method according to an embodiment of the present invention; and

FIG. 8 is a flowchart illustrating an advertisement displaying method according to another embodiment of the present invention.

* Description of reference numerals *

110: portable terminal

120: SMS server

130: charging server

140: advertisement server

150: advertising content DB

160: personal information DB

200: advertisement displaying system

210: advertisement output unit

220: advertisement-cancelling unit

230: selection-window display unit

240: content-transmitting unit

250: point-rewarding unit

260: control unit

### Mode for Carrying Out the Invention

Hereinafter, exemplary embodiments of the present invention will be described with reference to the accompanying drawings.

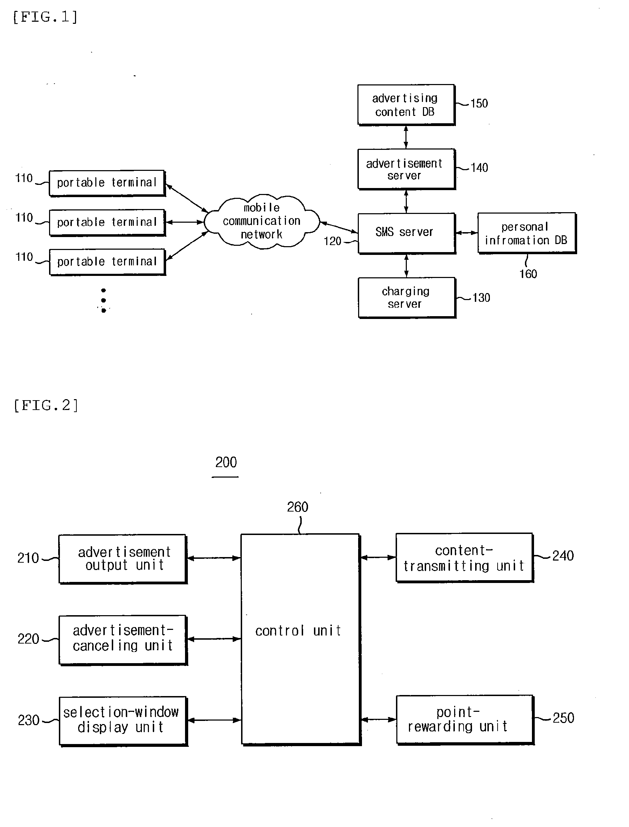

FIG. 1 illustrates a configuration of a network of an advertisement displaying system (hereinafter, referred to as an 'advertisement displaying system') that displays an advertisement in an idle space when arrival of a received message is received according to an embodiment of the present invention.

Referring to FIG. 1, a transmitter may select a menu for sending a text message in a portable terminal 110, may input a phone number of a receiver, a message, and the like, and may send the text message, then a portable terminal 110 of the receiver may receive a message arrival notification signal that reports arrival of the text message. Accordingly, the portable terminal 110 of the receiver may display a text message arrival notification window reporting the arrival of the text message, and may output an advertising content in an idle space of the message arrival notification window.

Here, the text message arrival notification window may include a button for checking the text message. When the receiver clicks the button on the text message arrival notification window, the text message arrival notification window may disappear and a text message window where the text message is checked may be displayed on the screen of the portable terminal 110.

The advertising content is continuously output even when the screen is shifted from the text message arrival notification window to the test message window. In this example, the advertising content may be continuously output and may be displayed on an idle space of the text message window. Accordingly, the receiver may continuously view the advertising content from a time when the arrival of the text message is received until the receiver checks the contents of the text message.

Subsequently, when the receiver checks the contents of the text message and closes the text message window, outputting of the advertising content may be cancelled. In this example, when the receiver agrees, outputting of the advertising content is cancelled, and simultaneously, a website of an advertiser associated with the advertising content may be displayed on the portable terminal 110.

The advertising content may be downloaded from an advertisement server 140 in advance. The downloaded advertising content may be stored in a memory of the portable terminal 110 of the receiver. Also, the advertising content may be received from the advertisement server 140 based on a streaming scheme at the same time of reception of the text message.

Hereinafter, a process in which the portable terminal 110 receives the advertising content from the advertisement server 140 will be described. Here, the process may correspond to a downloading scheme or a streaming scheme.

First, the transmitter may input a text message to the portable terminal 110 through a text input window, and may transmit transmission request information (a text, phone numbers of a transmitter and a receiver, and the like) associated with the input text message, to an SMS server 120 over a mobile communication network.

Next, the SMS server 120 may receive the text message from the portable terminal 110, and may transmit the received text message to a portable terminal 110 that is identified based on the phone number of the receiver. In addition, the SMS server 120 may transmit transmission request information associated with the advertising content to the advertisement server 140.

Then the advertisement server 140 may receive the transmission request information associated with the advertising content from the SMS server 120, and may read the advertising content from an advertising content database 150 based on the received transmission request information.

In this example, the advertising server 140 may search for personal information from the personal information database 160 based on identification information included in the transmission request information, and may selectively read an advertising content appropriate for the retrieved personal information (an advertising content that is effective to the transmitter) from the advertising content database 150.

For reference, the advertising content database 150 may store various advertising contents, for example, a moving picture, a picture, a text, a voice, and the like, and the personal information database 160 may store personal information of a mobile communication service subscriber, for example, a name of the subscriber, an address, a phone number, a job, local information (a house, a company, a current location, and the like), interests, and the like.

Here, the interests may correspond to information that a mobile communication company generally requires a customer to input for providing various services or advertising information when the customer subscribes to the mobile communication service and thus, the mobile communication company may selectively provide the customer with various information and services based on the interests of the customer.

The advertisement server 140 may transmit, to the portable terminal 110, the advertising content read from the advertising content database 150 via the mobile communication network.

Accordingly, the portable terminal 110 of the receiver may receive the retrieved advertising content from the advertisement server 140. In this example, when the advertising content is received based on the downloading scheme, the advertising content may be stored in a memory contained inside the portable terminal 110, and when the advertising content is received based on the streaming scheme, the advertising content may be displayed on the screen of the portable terminal 110 in real time.

For reference, the mobile communication network may correspond to a wireless network that is generally used for transceiving a text message, voice data, and various signals. Although it is not illustrated, the mobile communication network may include a base station, a base station controller, a mobile switching center (MSC), and a home location register (HLR).

The base station may exchange information with the portable terminal 110 through a transceiving antenna.

The base station controller may perform wired/wireless channel managing terminal protocol interfacing, base station protocol interfacing, and controlling, and may be in charge of managing the base station, such as managing of an error in system loading.

The MSC may process an outgoing or incoming signal of the base station, and may perform central-controlling that controls the base station controller to effectively operate.

The HLR may provide a transmission state or a reception state of a subscriber, various information such as a supplementary service, and a location of a subscriber.

Also, the charging server 130 may compute and register a fee charged for the use of the text message service by the receiver when the advertisement server 140 provides the advertising content, so that the receiver may use a text message service at no cost or a discount.

For reference, although an embodiment of the present invention describes that the receiver who receives the advertising content may get a discount on the fee through use of the charging server 130, embodiments of the present invention may not be limited thereto. In addition to the free text message service, various economical benefits may be provided to the receiver, such as a freebie of a predetermined company, a coupon for applying for an event that provides various benefits, and the like.

FIG. 2 illustrates an advertisement displaying system according to an embodiment of the present invention. Here, the advertisement displaying system may operate in the portable terminal 110 of FIG. 1.

Referring to FIG. 2, the advertisement displaying system 200 may include an advertisement output unit 210, an advertisement cancelling unit 220, a selection window display unit 230, a content transmitting unit 240, a point rewarding unit 250, and a control unit 260.

The advertisement output unit 210 may output an advertising content in an idle space of a message arrival notification window that reports arrival of the text message when a message arrival notification signal that reports the arrival of the text message is received by the portable terminal.

Here, the advertising content may be downloaded from an advertisement server in advance and be stored in a memory of the portable terminal, or may be received from the advertisement server based on a streaming scheme at the same time of the reception of the text message.

That is, the advertisement output unit 210 may search for the previously downloaded advertising content in the memory of the portable terminal and may output the retrieved advertising content in the message arrival notification window. Also, the advertisement output unit 210 may output the advertising content that is received based on the streaming scheme, in real time.

Here, the advertisement server may randomly select an advertising content from the advertisement database, and may transmit the selected advertising content to a portable terminal of a receiver. Also, the advertisement server may select an advertising content from the advertisement database based on personal information of the receiver, and may transmit the selected advertising content to the portable terminal of the receiver.

The advertisement output unit 210 may shift (change) a screen from the message arrival notification window that outputs the advertising content to a text message window where the received text message is checked when the receiver clicks a button for checking the text message.

Also, the advertisement output unit 210 may continuously output the advertising content in an idle space of the text message window. Also, the advertisement output unit 210 may output information associated with the advertising content in the idle space of the text message window, as opposed to continuously outputting the advertising content.

For example, the advertisement output unit 210 may output, in the idle space of the text message window, contents identical or similar to the advertising content, an abstract of the advertising content, and the like, as the information associated with the advertising content.

The advertisement cancelling unit 220 may cancel outputting of the advertising content when the receiver checks the text message and closes the text message window. That is, the advertising content may be continuously displayed on the message arrival notification window and the text message window from a time when the message arrival notification signal arrives at the portable terminal until the text message window is closed. The advertising content may disappear from a screen of the portable terminal immediately after the text message window is closed.

The selection window display unit 230 may display, on the screen of the portable terminal, a transmission selection window so as to determine whether to transmit an advertisement reception acknowledgement message when the receiver clicks the advertising content and looks at the details of the advertising content.

Here, the advertising content may be displayed on the idle space of the message arrival notification window or displayed on the idle space of the text message window.

The content transmitting unit 240 may transmit the advertising content along with the advertisement reception acknowledgement message to a portable terminal of a transmitter who transmits the text message when the receiver selects transmission-allow on the transmission selection window.

Accordingly, the advertising content may be displayed on a screen of the portable terminal of the transmitter. In this example, the advertising content may be displayed on an idle space of a reception acknowledgement message to check the advertisement reception acknowledgement message.

The point rewarding unit 250 may provide a predetermined number of points corresponding to a predetermined portion of advertising rates associated with the advertising content when the receiver selects transmission-refuse so that the receiver may send a text message at no cost or a discount.

The control unit 260 may control the advertisement displaying system 200, that is, general operations of the advertisement output unit 210, the advertisement cancelling unit 220, a selection window display unit 230, a content transmitting unit 240, a point rewarding unit 250, and the like.

According to another embodiment, the advertisement displaying system 200 may display the advertising content in an idle space (screen) of a missed message notification window when a missed call exists.

Here, the missed call may refer to a call of which an incoming signal is terminated since the receiver fails to answer the incoming signal received by a portable terminal. When a missed call for the portable terminal exists, the advertisement output unit 210 may output an advertizing content in the idle space of the missed message notification window that reports that a missed call exists.

The missed message notification window may include a button for the receiver to check a phone number of a missed incoming call. When the receiver clicks the button (touches the button in a case of a touch phone), the advertisement output unit 210 may shift a screen to a missed call checking window, and may continuously output the advertising content in an idle space of the missed call checking window.

The advertisement cancelling unit 220 may cancel outputting of the advertising content, and simultaneously, shift the screen to a website of an advertiser when the receiver checks the phone number and closes the missed call checking window.

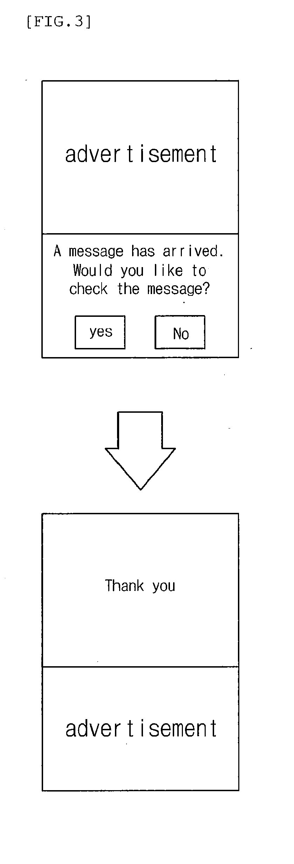

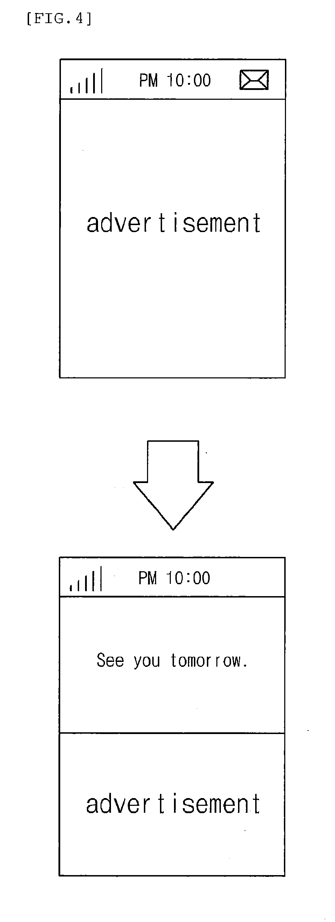

FIGS. 3 and 4 illustrate an example of displaying an advertising content according to an embodiment of the present invention. In particular, FIG. 3 illustrates an example of displaying an advertising content in a touch phone, and FIG. 4 illustrates an example of displaying an advertising content in a 2G phone.

In a case of the touch phone, when a message arrival notification signal is received, a message arrival notification window as shown in i) of FIG.3 may be displayed on a screen, and an advertisement may be displayed on an idle space of an upper portion of the message arrival notification (a screen area where a character is not displayed).

Subsequently, when a receiver touches a button for checking a message ("Yes" button) on the message arrival notification window, the touch phone may shift a screen to a text message window as shown in ii) of FIG. 3 , and may continuously display the advertisement on an idle space of a lower portion of the text message window.

Conversely, when the receiver touches a button for refusing to check a message ("No" button), the touch phone may cancel outputting of an advertisement and switch the screen into an idle mode.

In a case of the 2G phone, when a message arrival notification signal is received, a message arrival notification window, in which an icon of an envelope shape as shown in i) of FIG. 4 is displayed on an upper portion of a screen, may be displayed on the screen, and an advertisement may be displayed on an idle space of the message arrival notification.

Subsequently, when a receiver clicks a check-button in a keypad, the 2G phone may shift the screen to a text message window as shown in ii) of FIG. 4, and may continuously display the advertisement in an idle space of a lower portion of the text message window.

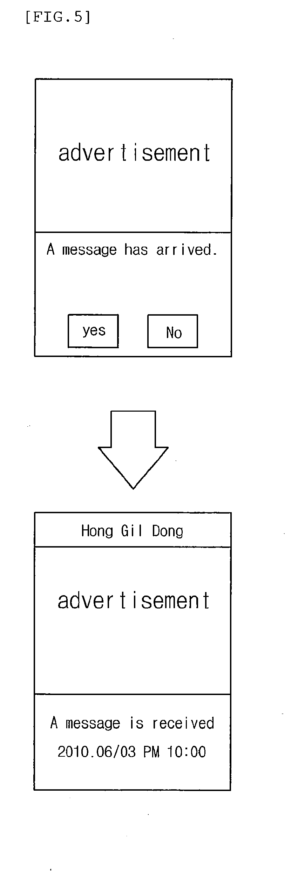

FIG. 5 illustrates an example of a screen when an advertisement is received according to an embodiment of the present invention.

When a receiver views an advertisement displayed on a message arrival notification window, a transmission selection window may be displayed on a screen of a portable terminal of the receiver so as to determine whether to transmit a message (ACK message) indicating that the advertisement is received from a transmitter, as shown in i) of FIG. 5.

Subsequently, when the receiver selects transmission-allow (clicks/touches a "Yes" button) on the transmission selection window, the advertisement that is transmitted to the portable terminal of the receiver may be displayed on a portable terminal of the transmitter along with an advertisement reception acknowledgement message ("A message is received." 2010.06/03 PM 10:00) as shown in ii) of FIG. 5.

Conversely, when the receiver selects transmission-refuse (clicks/touches a "No" button) on the transmission selection window, the receiver may be provided with a predetermined number of points corresponding to a predetermined portion of advertising rates and the like. Accordingly, the receiver may send a text message at no cost through use of the points and the like.

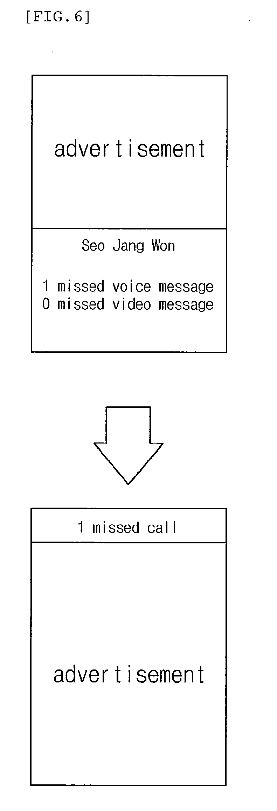

FIG. 6 illustrates an example of displaying an advertising content according to another embodiment of the present invention.

When a missed call (including a voice call and a video call) exists, a missed message notification window may be displayed in various forms on a screen of a portable terminal, as shown in i) and ii) of FIG. 6.0

In this example, an area that is not used for the missed message notification window, that is, an idle space, may exist, and the portable terminal may display an advertisement on the idle space.

Although not illustrated, the missed message notification window may include a button for checking a phone number, or the missed message notification window may not include the button for checking a phone number, as illustrated in the drawing.

When the missed message notification window includes the button for checking a phone number, a phone number may be checked by clicking (touching) the button for checking a phone number. When the missed message notification window does not include the button for checking a phone number, the phone number may be checked by clicking a check-button in a key pad. Then the screen of the portable terminal may be shifted from the missed message notification window to a missed call phone number checking window (not illustrated), and the advertisement may be continuously displayed on an idle space of the missed call phone number checking window.

Subsequently, when the missed call phone number checking window is closed on the screen of the portable phone, outputting the advertisement in the missed call phone number checking window may be cancelled, or the screen may be shifted from the missed call phone number checking window to a website of an advertiser.

When the receiver checks the missed call, an advertisement may be transmitted to the transmitter along with an acknowledgement text message reporting that the missed call is checked, or the receiver may be provided with a predetermined number of points that enable the receiver to send a test message at no cost or at a discount.

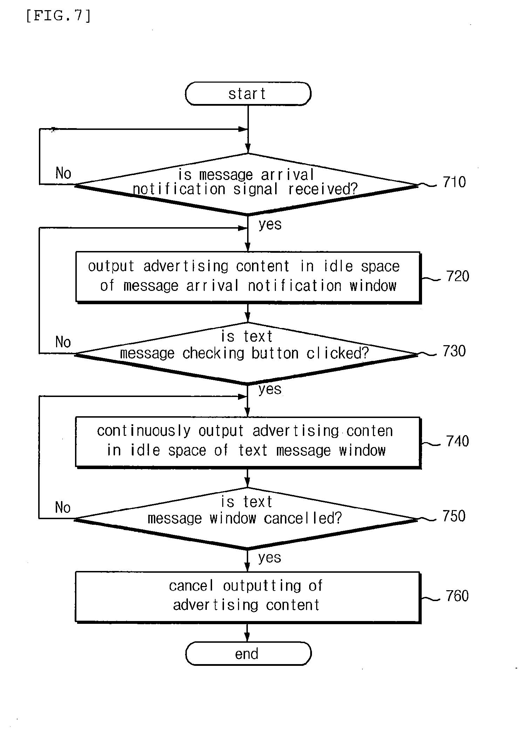

FIG. 7 illustrates an advertisement displaying method that displays an advertisement in an idle space when arrival of a received message (hereinafter, referred to as an 'advertisement displaying method') is reported according to an embodiment of the present invention. Here, the advertisement displaying method may be performed by the advertisement displaying system of FIG. 1.

Referring to FIG. 7, the advertisement displaying system may determine whether a message arrival notification signal that reports arrival of a text message is received in operation 710.

When the message arrival notification signal is received ("Yes" of operation 710), the advertisement displaying system may output an advertising content in an idle space of a message arrival notification window that reports the arrival of the text message, in operation 720.

Conversely, when the message arrival notification signal is received ("No" of operation 710), the advertisement displaying system may wait until the message arrival notification signal is received.

Subsequently, it is determined whether the receiver clicks a button for checking the text message on the message arrival notification window where the advertising content is being output, in operation 730.

When the button for checking the text message is clicked ("Yes" of operation 730), the advertisement displaying system may shift a screen to a text message window where the received text message is checked, and may continuously output the advertising content in an idle space of the text message window, in operation 740.

In this example, the advertisement output unit 210 may output information associated with the advertising content in the idle space of the text message window, such as information identical or similar to the advertising content, an abstract of the advertising content, and the like.

Conversely, when the button for checking the text message is not clicked ("No" of operation 730), the advertisement displaying system may perform operation 720. In this example, operation 720 may be performed for a predetermined time, and when operation 720 is completed, the advertisement displaying system may shift the screen of the portable terminal to an idle screen.

Subsequently, it is determined whether the receiver cancels (closes) the text message window after checking the text message, in operation 750.

When the text message window is cancelled ("Yes" of operation 750), the advertisement displaying system may cancel outputting of the advertisement content and may return to a previous screen (idle screen) in operation 760. Also, the advertisement displaying system may shift the screen to a website of an advertiser at the same time of the cancelation of the outputting of the advertising content and thus, may display the website of the advertiser on the screen of the portable terminal.

Conversely, when the text message window is not cancelled (opened) ("No" of operation 750), the advertisement displaying system may proceed with operation 740. The operation 740 may be performed for a predetermined time, and when operation 740 is completed, the advertisement displaying system may switch the screen of the portable terminal to an idle screen.

As described in the foregoing, the advertisement content may be continuously displayed on the message arrival notification window and the text message window, from a time when the message arrival notification signal arrives at the portable terminal until the text message window is closed. Also, the advertising content may disappear from the screen of the portable terminal immediately after the text message window is closed.

When the receiver clicks the advertising content and looks at the details of the advertising content, the advertisement displaying system may display a transmission selection window on the screen of the portable terminal, so as to determine whether to transmit an advertisement reception acknowledgement message.

Here, the advertising content may be displayed on the idle space of the message arrival notification window or the idle space of the text message window.

When the receiver selects transmission-allow from the transmission selection window, the advertisement displaying system may transmit the advertising content to a portable terminal of a transmitter who transmits the text message along with the advertisement reception acknowledgement message.

Accordingly, the advertising content may be displayed on the screen of the portable terminal of the transmitter. In this instance, the advertising content may be displayed on an idle space of a reception acknowledgement message window for checking the advertisement reception acknowledgement message.

Also, when the receiver selects transmission-refuse on the transmission selection window, the advertisement displaying system may provide the receiver with a predetermined number of points corresponding to a predetermined portion of advertising rates of the advertising content so that the receiver may send a free text message through use of the points.

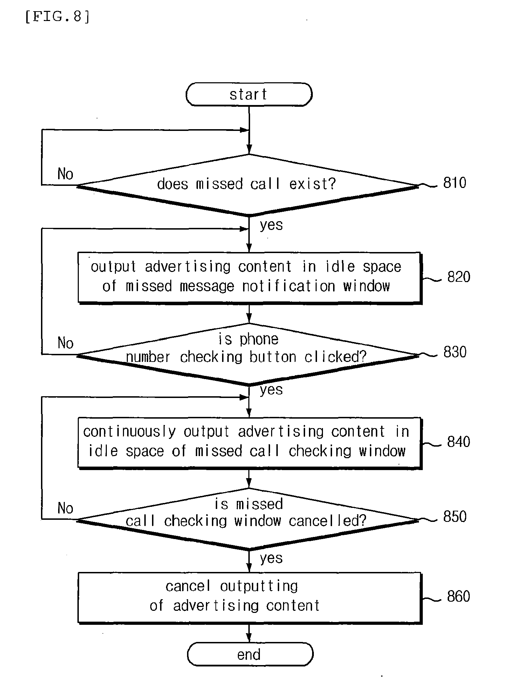

FIG. 8 illustrates an advertisement displaying method according to another embodiment of the present invention.

Referring to FIG. 8, an advertisement displaying system may determine whether a missed call exists in a portable terminal in operation 810.

When the missed call exists ("Yes" of operation 810), the advertisement displaying system may output an advertising content in an idle space of a missed message notification window that reports a missed call exists, in operation 820.

Conversely, when the missed call does not exist ("No" of operation 810), the advertisement displaying system may wait until a missed call occurs.

Subsequently, the advertisement displaying system may determine whether the receiver clicks (touches) a button for checking a phone number on the missed message notification window in operation 830.

When the button for checking a phone number ("Yes" of operation 830) is clicked, the advertisement displaying system may shift a screen to a missed call checking window where a phone number is checked, and may continuously output the advertising content in an idle space of the missed call checking window.

Conversely, when the button for checking the phone number is not clicked ("No" of operation 830), the advertisement displaying system may proceed with operation 820. In this example, operation 820 may be performed for a predetermined time, and when operation 820 is completed, the advertisement displaying system may switch the screen of the portable terminal to an idle screen.

Subsequently, the advertisement displaying system may determine whether the receiver cancels (closes) the missed call checking window after checking the phone number, in operation 850.

When the missed call checking window is cancelled (closed) ("Yes" of operation 850), the advertisement displaying system may return to a previous screen (idle screen) in operation 860. Also, the advertisement displaying system may shift the screen to a website of an advertiser at the same time of the cancellation of outputting of the advertising content and thus, may display the website of the advertiser on the screen of the portable terminal.

Conversely, when the missed call checking window is not cancelled (opened) ("No" of operation 850), the advertisement displaying system may proceed with operation 840. The operation 840 may be performed for a predetermined time, and when operation 840 is completed, the advertisement displaying system may switch the screen of the portable terminal to an idle screen.

As described in the foregoing, according to an embodiment of the present invention, the advertisement displaying system and method may display an advertisement content on idle spaces of a message arrival notification window and a text message window, from a time when a message arrival notification signal arrives at the portable terminal until the text message window is closed and thus, may effectively provide an advertisement while a portable phone user pays attention to checking a text message.

Also, according to an embodiment of the present invention, the advertisement displaying system and method may display an advertisement on an idle space of a screen when a missed call exists and thus, may draw attention from a user and may maximize an advertising effect without causing inconvenience to the user.

Also, according to an embodiment of the present invention, the advertisement displaying system and method may provide a predetermined number of points corresponding to a predetermined portion of advertising rates to a receiver who views an advertisement so that the receiver may have a benefit of a free text message service.

The exemplary embodiments according to the present invention may be recorded in computer-readable media including program instructions to implement various operations embodied by a computer. The media may also include, alone or in combination with the program instructions, local data files, local data structures, and the like. The media may be specially designed and constructed for the purposes of the present invention, or they may be of the kind well-known and available to those having skill in the computer software arts. Examples of computer-readable media include magnetic media such as hard disks, floppy disks, and magnetic tape; optical media such as CD-ROM disks and DVD; magneto-optical media such as floptical disks; and hardware devices that are specially configured to store and perform program instructions. Examples of program instructions include both machine code, such as produced by a compiler, and higher level code that may be executed by the computer using an interpreter.

Although detailed embodiments of the present invention have been described, it will be apparent that various changes can be made in the present invention without departing from the spirit or scope of the invention. Thus, the present invention is not limited to the described embodiments, and the scope of the present invention is defined by the claims and their equivalents.

Although a few embodiments of the present invention have been shown and described, the present invention is not limited to the described embodiments. Instead, it would be appreciated that various modifications and variation may be made to these embodiments without departing from the principles and spirit of the invention. Thus, the scope of which is defined by the claims and their equivalents.

## Claims

1. A method for an advertisement displaying system to display an advertisement in an idle space when arrival of a received message is reported, the method comprising:
outputting, by the advertisement displaying system, an advertising content in an idle space of a message arrival notification window that reports arrival of a text message when a message arrival notification signal that reports the arrival of the text message is received by a portable terminal;
shifting, by the advertisement displaying system, the message arrival notification window to a text message window where the received text message is checked, and continuously outputting the advertising content in an idle space of the text message window when a button for checking the text message is clicked on the message arrival notification window where the advertising content is being output;
cancelling, by the advertisement displaying system, outputting of the advertising content and shifting the text message window to a website of an advertiser when the text message window is closed;
displaying, by the advertisement displaying system, a transmission selection window on a screen of the portable terminal so as to determine whether to transmit an advertisement reception acknowledgement message when the advertising content displayed on the idle space of the message arrival notification window or the advertising content displayed on the idle space of the text message window is clicked; and
transmitting, by the advertisement displaying system, the advertisement reception acknowledgement message and the advertising content to a portable terminal of a transmitter who transmits the text message when transmission-allow is selected on the transmission selection window,
wherein the advertising content is downloaded from an advertisement server in advance and stored in a memory of the portable terminal, or is received from the advertisement server based on a streaming scheme at the same time of the reception of the text message, and is displayed on an idle space of a reception acknowledgement message window for checking the advertisement reception acknowledgement message, when the advertising content is displayed on a screen of the portable terminal of the transmitter.

2. The method as claimed in claim 1, wherein, when transmission-refuse is selected on the transmission selection window, the method for the advertisement displaying system further comprises providing a receiver with a predetermined number of points corresponding to a predetermined portion of advertising rates associated with the advertising content so that the receiver sends a free text message through use of the points.

3. The method as claimed in claim 1, wherein information associated with the advertising content is output in the idle space of the text message window.

4. The method as claimed in claim 1, wherein the advertisement server selects a corresponding advertising content from an advertisement database based on personal information of a receiver, and transmits the corresponding advertising content to a portable terminal of the receiver.

5. A method for an advertisement displaying system to display an advertisement in an idle space when a missed call is reported, the method comprising:
outputting, by the advertisement displaying system, an advertising content in an idle space of a missed message notification window reporting that a missed call exists when a receiver fails to answer an incoming signal received by a portable terminal and the incoming signal is terminated;
shifting, by the advertisement displaying system, the missed message notification window to a missed call checking window where a phone number of a missed incoming call is checked, and continuously outputting the advertising content in an idle space of the missed call checking window when a button for checking the phone number is clicked on the missed message notification window where the advertising content is being output;
cancelling, by the advertisement displaying system, outputting of the advertising content and simultaneously, shifting the missed call checking window to a website of an advertiser when the missed call checking window is closed;
displaying, by the advertisement displaying system, a transmission selection window on a screen of the portable terminal so as to determine whether to transmit an advertisement reception acknowledgement message when the advertising content displayed on the idle space of the missed message notification window or the advertising content displayed on the idle space of the missed call checking window is clicked; and
transmitting, by the advertisement displaying system, the advertisement reception acknowledgement message and the advertising content to a portable terminal of a transmitter who transmits the text message when transmission-allow is selected on the transmission selection window,
wherein the advertising content is downloaded from an advertisement server in advance, and stored in a memory of the portable terminal, or is received from the advertisement server based on a streaming scheme at the same time of the reception of the text message, and is displayed on an idle space of a reception acknowledgement message window for checking the advertisement reception acknowledgement message, when the advertising content is displayed on a screen of the portable terminal of the transmitter.

6. The method as claimed in claim 5, wherein, when a button for checking the phone number of the missed incoming call is clicked on the missed message notification window, the method for the advertisement displaying system further comprises transmitting, to the portable terminal of the transmitter, an acknowledgement text message reporting that the phone number of the missed incoming call is checked, and providing the portable terminal of the receiver with points that can send a free text message.

7. The method as claimed in claim 5, wherein, when transmission-refuse is selected on the transmission selection window, the method for the advertisement displaying system further comprises providing the receiver with a predetermined number of points corresponding to a predetermined portion of advertising rates associated with the advertising content so that the receiver sends a free text message through use of the points.

8. An advertisement displaying system for displaying an advertisement in an idle space when arrival of a received message is reported, the system comprising:
an advertisement output unit to output an advertising content in an idle space of a message arrival notification window that reports arrival of a text message when a message arrival notification signal that reports the arrival of the text message is received by a portable terminal, and when a button for checking the text message is clicked on the message arrival notification window where the advertising content is being output, to shift the message arrival notification window to a text message window where the received text message is checked, and to continuously output the advertising content in an idle space of the text message window;
an advertisement cancelling unit to cancel outputting of the advertising content, and simultaneously, to shift the text message window to a website of an advertiser when the text message window is closed;
a selection window display unit to display a transmission selection window on a screen of the portable terminal so as to determine whether to transmit an advertisement reception acknowledgement message when the advertising content displayed on the idle space of the message arrival notification window or the advertising content displayed on the idle space of the text message window is clicked; and
a content transmitting unit to transmit the advertisement reception acknowledgement message and the advertising content to a portable terminal of a transmitter who transmits the text message when transmission-allow is selected on the transmission selection window,
wherein the advertising content is downloaded from an advertisement server in advance and stored in a memory of the portable terminal, or is received from the advertisement server based on a streaming scheme at the same time of the reception of the text message, and is displayed on an idle space of a reception acknowledgement message window for checking the advertisement reception acknowledgement message, when the advertising content is displayed on a screen of the portable terminal of the transmitter.

9. The system as claimed in claim 8, wherein the system further comprises a point providing unit to provide a receiver with a predetermined number of points corresponding to a predetermined portion of advertising rates associated with the advertising content so that the receiver sends a free text message through use of the points when transmission-refuse is selected on the transmission selection window.

10. An advertisement displaying system for displaying an advertisement in an idle space when a missed call is reported, the system comprising:
an advertisement output unit to output an advertising content in an idle space of a missed message notification window reporting that a missed call exists when a receiver fails to answer an incoming signal received by a portable terminal and the incoming signal is terminated, and when a button for checking a phone number of a missed incoming call is clicked on the missed message notification window where the advertising content is being output, to shift the missed message notification window to a missed call checking window where the phone number is checked, and to continuously output the advertising content in an idle space of the missed call checking window;
an advertisement cancelling unit to cancel outputting of the advertising content, and simultaneously, to shift the missed call checking window to a website of an advertiser when the missed call checking window is closed;
a selection window display unit to display a transmission selection window on a screen of the portable terminal so as to determine whether to transmit an advertisement reception acknowledgement message when the advertising content displayed on the idle space of the missed message notification window or the advertising content displayed on the idle space of the missed call checking window is clicked; and
a content transmitting unit to transmit the advertisement reception acknowledgement message and the advertising content to a portable terminal of a transmitter when transmission-allow is selected on the transmission selection window,
wherein the advertising content is downloaded from an advertisement server in advance and stored in a memory of the portable terminal, or is received from the advertisement server based on a streaming scheme at the same time of the reception of the text message, and is displayed on an idle space of a reception acknowledgement message window for checking the advertisement reception acknowledgement message, when the advertising content is displayed on a screen of the portable terminal of the transmitter.

11. The system as claimed in claim 10, wherein the system further comprises a point providing unit to transmit, to the portable terminal of the transmitter, an acknowledgement text message reporting that the phone number of the missed incoming call is checked, and to provide a portable terminal of the receiver with points that can send a free text message when a button for checking the phone number of the missed incoming call is clicked on the missed message notification window.
